# EUROPÄISCHE PATENTANMELDUNG

(11) **EP 4 372 869 A2**
(43) Veröffentlichungstag der Anmeldung: **22.05.2024**
(21) Anmeldenummer: 23210141.0
(22) Anmeldetag: 15.11.2023
(51) Int. Cl.: H01M 10/625

(54) **BATTERIE FÜR EIN KRAFTFAHRZEUG**

(30) Priorität: 15.11.2022 DE 102022130226
(71) Anmelder: Webasto SE, 82131 Stockdorf (DE)
(72) Erfinder: Wegener, Fritz, Stockdorf (DE)
(74) Vertreter: Nordmeyer, Philipp Werner

(57) **Zusammenfassung**

Die vorliegende Erfindung betrifft eine Batterie (1), bevorzugt eine Traktionsbatterie, für ein Kraftfahrzeug, umfassend ein Batteriemodul (2) und eine Temperierplatte (4), wobei zwischen dem Batteriemodul (2) und der Temperierplatte (4) eine Wärmeleitpaste (3) angeordnet ist, wobei zwischen dem Batteriemodul (3) und der Temperierplatte (4) ein elektrisch isolierender Distanzhalter (5) angeordnet ist.

## Beschreibung

### Technisches Gebiet

Die vorliegende Erfindung betrifft eine Batterie, insbesondere eine Traktionsbatterie für ein Kraftfahrzeug.

### Stand der Technik

Die Leistungsanforderungen an moderne Batterien steigt stetig an, wobei eine möglichst optimale Nutzung des verfügbaren Bauraums und Materialeinsatz zur Steigerung des Leistung-Gewicht-Verhältnisses im Fokus der Entwicklung stehen. Die Entwicklung erfolgt dabei immer unter Berücksichtigung der Sicherheit, um beispielsweise Kurzschlüsse zu verhindern.

Batterien können ein Batteriegehäuse aufweisen, in welchem eines oder mehrere Batteriemodule eingebaut sind. In den Batteriemodulen sind die eigentlichen Batteriezellen mechanisch, logisch und elektrisch organisiert. Eine Temperierungsplatte zur Temperierung der Batteriemodule kann vorgesehen sein, wobei die Temperierungsplatte typischer Weise von einem Temperierungsmedium durchströmt wird, um eine Kühlung oder Heizung der Batteriezellen zu ermöglichen.

Die Batteriemodule können dabei mittels eines Wärmeleitmediums mit der Temperierungsplatte thermisch verbunden sein. Als Wärmeleitmedium kann eine Wärmeleitpaste zwischen Batteriemodul und Temperierplatte angeordnet sein.

Es ist aus der DE 10 2021 000 981 A1 bekannt, zwischen Batteriezelle und Gehäuseboden eine Strukturmatte einzubringen, um eine vereinfachte Demontage insbesondere einer vereinfachten Entnahme von Batteriezellen zu realisieren.

### Darstellung der Erfindung

Ausgehend von dem bekannten Stand der Technik ist es eine Aufgabe der vorliegenden Erfindung, eine weiter verbesserte Batterie bereitzustellen.

Die Aufgabe wird durch eine Batterie, bevorzugt eine Traktionsbatterie für ein Kraftfahrzeug, mit den Merkmalen des Anspruchs 1 gelöst. Vorteilhafte Weiterbildungen ergeben sich aus den Unteransprüchen, der Beschreibung und den Figuren.

Entsprechend wird eine Batterie, insbesondere eine Traktionsbatterie für ein Kraftfahrzeug, vorgeschlagen, umfassend ein Batteriemodul und eine Temperierplatte, wobei zwischen dem Batteriemodul und der Temperierplatte eine Wärmeleitpaste angeordnet ist. Erfindungsgemäß ist zwischen dem Batteriemodul und der Temperierplatte ein elektrisch isolierender Distanzhalter angeordnet.

Durch die Anordnung eines Distanzhalters kann ein Mindestabstand in Form eines Spalts zwischen dem Batteriemodul und der Temperierplatte sichergestellt werden, sodass durch Unebenheiten der Temperierplatte oder durch Partikel im Spalt, wie beispielsweise Metallspäne, die elektrische Isolierung zwischen Batteriemodul und Temperierplatte aufrechterhalten werden kann.

Damit der Distanzhalter keine elektrisch leitende Brücke zwischen Batteriemodul und Temperierplatte ausbildet, besteht dieser aus einem elektrisch isolierenden Material, bevorzugt einem Kunststoff.

Entsprechend kann der elektrisch isolierende Distanzhalter eine Dicke aufweisen, die einen vorgegebenen Spalt zwischen dem Batteriemodul und der Temperierplatte sicherstellt.

Diese Anordnung des Distanzhalters ermöglicht es zusätzlich, einen minimalen Spaltabstand ohne zusätzliche Sicherheitsmarge zwischen dem Batteriemodul und der Temperierplatte sicherzustellen, sodass eine kompakte Bauweise und eine vorteilhafte und effektive Temperierung des Batteriemoduls möglich ist.

Darüber hinaus kann auf diese Weise das zu verwendende Volumen an Wärmeleitpaste gegenüber den bekannten Anwendungen reduziert werden, denn es muss nur die tatsächlich notwendige Spaltdicke mit Wärmeleitpaste ausgefüllt werden und nicht eine durch Sicherheitsmargen erhöhte Spaltdicke. Durch die sichere Einstellung eines vordefinierten minimalen Spaltabstands kann entsprechend die Menge an Wärmeleitpaste reduziert und minimal gehalten werden, wodurch Kosten und Gewicht gespart werden können. Weiterhin wirkt sich der verminderte Einsatz von Wärmeleitpaste auch vorteilhaft auf die Dauerhaltbarkeit der Batterie aus.

Der elektrisch isolierende Distanzhalter kann eine Wärmeleitfähigkeit aufweisen, die der Wärmeleitfähigkeit der Wärmeleitpaste entspricht. Damit kann ein besonders homogener Wärmeübertrag erreicht werden, der sich über die gesamte Fläche der Temperierplatte hinweg erstreckt.

Eine Unterseite des Distanzhalters, die auf einer Oberseite der Temperierplatte aufliegt, kann so ausgeformt sein, dass ein vollflächiger Kontakt zwischen der Unterseite des Distanzhalters und der Oberseite der Temperierplatte herstellbar ist. Die Oberseite des Distanzhalters kann entsprechend eine Unterseite des Batteriemoduls kontaktieren, wobei der Kontakt vollflächig sein kann.

Durch den Kontakt des Batteriemoduls mit dem Distanzhalter wird der gewünschte minimale Spaltabstand eingestellt. Gleichzeitig ergibt sich eine weitere Stützung des Batteriemoduls gegenüber der Temperierplatte, die sich vorteilhaft auf die Gesamtstabilität der Batterie auswirken kann.

Der elektrisch isolierende Distanzhalter kann mit der Temperierplatte verklebt sein. Auf diese Weise ergibt sich eine zuverlässige Positionierung des Distanzhalters und damit eine vereinfachte Montage der Batterie.

Im montierten Zustand kann der elektrisch isolierende Distanzhalter dabei durch seine Dicke dazu führen, dass die Temperierplatte elastisch und/oder plastisch verformt wird. Beispielsweise kann der elektrisch isolierende Distanzhalter die Temperierplatte zumindest im Bereich der Anlage des Distanzhalters an der Temperierplatte die Temperierplatte quasi wegdrücken, wenn das Batteriemodul bei der Montage auf den elektrisch isolierenden Distanzhalter drückt.

Dabei kann durch das gewählte Material der Temperierplatte, beispielsweise der Legierung des Materials der Temperierplatte, sichergestellt werden, dass die Kräfte, die durch die Verformung auf das Batteriemodul wirken, im zulässigen Bereich verbleiben.

In einer anderen Anordnung kann die Dicke des elektrisch isolierenden Distanzhalters aber auch dazu führen, dass noch ein Spalt zwischen dem elektrisch isolierenden Distanzhalter und der Temperierplatte und/oder dem Batteriemodul vorhanden ist und dieser Spalt dann auch zumindest teilweise mit Wärmeleitpaste gefüllt ist. Diese Situation kann beispielsweise auch auftreten, wenn durch den Verdrängungswiderstand der Wärmeleitpaste der Spalt zwischen Batteriemodul und Temperierplatte größer bleibt, als die Dicke des elektrisch isolierenden Distanzhalters.

Der elektrisch isolierende Distanzhalter kann auf einer Mittelebene des Batteriemoduls angeordnet sein. Beispielsweise ist der Distanzhalter mittig auf einer zum Batteriemodul zeigenden Oberseite der Temperierplatte angeordnet und das Batteriemodul wird so angeordnet, dass der Distanzhalter mittig auf der Unterseite des Batteriemoduls angeordnet ist. Somit weisen in einer Schnittansicht der Distanzhalter, die Temperierplatte und das Batteriemodul eine gemeinsame Mittelebene auf.

In einer vorteilhaften Ausführungsform weist der Distanzhalter eine Länge auf, die kleiner oder gleich einer in parallele Richtung erstreckende Länge des Batteriemoduls ist.

Hierdurch ist über eine möglichst große Erstreckungsrichtung eine Kontaktierung des Batteriemoduls und des Distanzhalters herstellbar, wodurch ein konstanter Spaltabstand sicherstellbar ist. Um dennoch eine kompakte Bauweise der Batterie zu ermöglichen und vorteilhafte Temperiereigenschaften bereitzustellen, ist die Länge des Distanzhalters kleiner oder gleich der Länge des Batteriemoduls.

Der elektrisch isolierende Distanzhalter kann an einer Position der Temperierplatte angeordnet sein, die innerhalb einer durch Befestigungseinrichtungen zur Befestigung des Batteriemoduls gebildeten Fläche der Temperierplatte liegt, beispielsweise in einem mittleren Bereich dieser Fläche.

Damit kann der Distanzhalter in dem Bereich der größten Durchhängung zwischen den Befestigungseinrichtungen angeordnet sein und damit eine weitere Stützung des Batteriemoduls erreichen. Gleichzeitig wird in diesem Bereich der größten Durchhängung durch den Distanzhalter auch die Ausbildung der korrekten Dimensionierung des Spalts erreicht.

Die Wärmeleitpaste kann den Distanzhalter zumindest seitlich umgeben.

Ein Umgeben des Distanzhalters mit der Wärmeleitpaste führt zu einer vorteilhaften Temperierung des Batteriemoduls auch im Bereich des Distanzhalters, so dass hier eine im Wesentlichen homogene Temperierung erreicht werden kann.

Der elektrisch isolierende Distanzhalter kann einen über seine Länge hinweg konstanten Querschnitt aufweisen, wobei der Querschnitt viereckig oder rechteckig sein kann.

Hierdurch wird einerseits eine einfache und kostengünstige Fertigung des Distanzhalters erreicht. Andererseits führt der konstante Querschnitt zu einer gleichmäßigen Lastverteilung über die Länge des Distanzhalters hinweg. Um die Kontaktflächen zwischen Distanzhalter und Batteriemodul sowie Temperierplatte vorteilhaft auszuformen, ist die jeweilige Kontaktfläche des Distanzhalters parallel zu der Kontaktfläche des in Kontakt befindlichen Bauteils (Temperierplatte oder Batteriemodul) ausgeformt.

Eine Höhe des Distanzhalters kann kleiner als die Länge oder eine Breite des Distanzhalters sein. Diese Ausformung ist kostengünstig und gewichtsreduzierend. Weiterhin ist die Kontaktfläche relativ groß, wodurch ein konstanter Spaltabstand und eine verbesserte Lastverteilung sicherstellbar ist.

Der Distanzhalter kann einteilig ausgeformt sein.

Die einteilige Ausformung des Distanzhalters ist kostengünstig in der Herstellung und bietet strukturelle Vorteile hinsichtlich der Anordnung zwischen der Temperierplatte und dem Batteriemodul. Außerdem führt eine einteilige Ausformung des Distanzhalters zu einer gleichmäßigeren Kraftverteilung über die Fläche und kann somit eine gleichmäßige Deformierung der Temperierplatte positiv beeinflussen.

Die Temperierplatte kann eine Einsenkung aufweisen, welche eine Aufnahme für den elektrisch isolierenden Distanzhalter ausbildet, der elektrisch isolierende Distanzhalter kann dann in der Einsenkung angeordnet sein und der elektrisch isolierende Distanzhalter kann dabei über die durch die Temperierplatte ausgebildete Ebene hinausragen.

Zum Ausformen der Einsenkung in die Temperierplatte wird diese dauerhaft deformiert, bevorzugt mittels Tiefziehens. Die Einsenkung kann nach der Deformation eine Auflagefläche aufweisen, welche die Unterseite des Distanzhalters aufnehmen kann. Hierdurch wird eine vorteilhafte Auflage des Distanzhalters in der Einsenkung sichergestellt, wodurch ein konstanter Spaltabstand herstellbar ist. Darüber hinaus ist die strukturelle Belastung der Temperierplatte im montierten Zustand vorteilhaft.

Der Distanzhalter ist dabei in seinen Abmessungen so ausgeformt, dass dieser nach Anordnung in der Einsenkung aus der Einsenkung und damit der durch die Temperierplatte ausgebildeten Ebene herausragt, wodurch der gewünschte Spaltabstand zwischen dem Batteriemodul und der Temperierplatte sicherstellbar ist.

Es können mindestens zwei elektrisch isolierende Distanzhalter je Batteriemodul vorgesehen sein.

Hierdurch ist eine verbesserte Lastverteilung und Sicherstellung des Spaltabstandes erreichbar. Die Anordnung und Ausformung der weiteren Distanzhalter ist dabei beliebig, wobei die weiteren Distanzhalter zumindest elektrisch isolierende Eigenschaften aufweisen, sodass ein Kurzschluss verhindert wird und die weiteren Distanzhalter so ausgeformt sind, dass ein gleichmäßiger Spaltabstand sichergestellt ist.

Die weiteren Distanzhalter können beispielsweise parallel und/oder orthogonal zueinander verlaufen.

Hierdurch ist eine vorteilhafte Lastverteilung und Sicherstellung des Spalts an der Unterseite des Batteriemoduls sicherstellbar. Sollten die weiteren Distanzhalter so angeordnet werden, dass Überschneidungen der weiteren Distanzhalter untereinander oder mit dem Distanzhalter auftreten, so sind die weiteren Distanzhalter so auszuformen, dass die Oberseiten der weiteren Distanzhalter und des Distanzhalters eine Ebene ausbilden. Dies kann beispielsweise durch eine Teilung der weiteren Distanzhalter, sodass ein Kontakt an zueinander zeigenden Seiten der weiteren Distanzhalter oder des Distanzhalters möglich ist, wobei die Anmeldung nicht auf die hier genannten Möglichkeiten der Anordnung der weiteren Distanzhalter beschränkt ist.

Die Temperierplatte kann eine Bodenplatte und Kühlkanäle umfassen und auf diese Weise prinzipiell eine herkömmliche Temperierplatte ausbilden.

### Kurze Beschreibung der Figuren

Bevorzugte weitere Ausführungsformen der Erfindung werden durch die nachfolgende Beschreibung der Figuren näher erläutert. Dabei zeigen:
Figur 1 eine schematische Schnittansicht durch eine Batterie, und
Figur 2 eine perspektivische Ansicht auf eine Temperierplatte.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

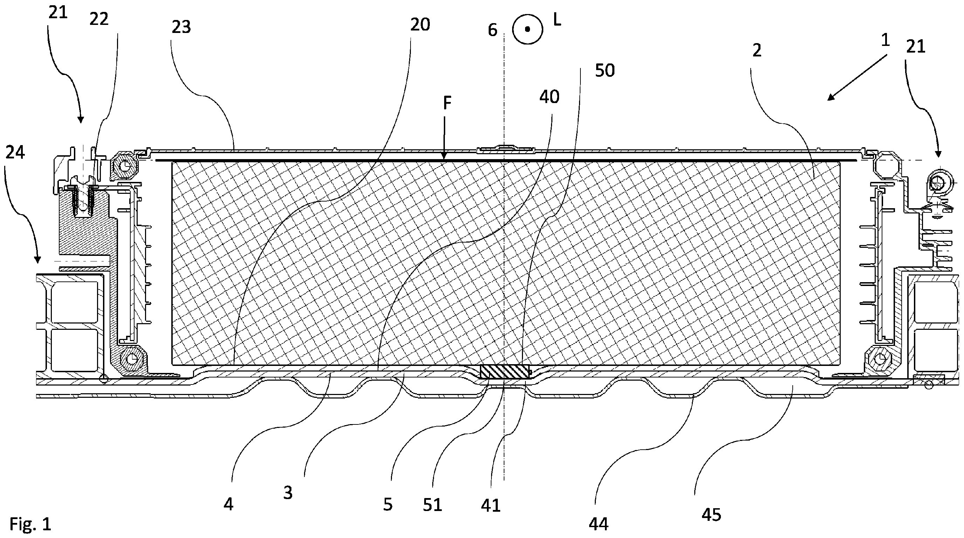

In Figur 1 ist eine schematische Schnittansicht durch einen Abschnitt einer Batterie 1, umfassend ein Batteriemodul 2 und eine Temperierplatte 4, gezeigt. Die Batterie 1 weist ein hier nur angedeutetes Gehäuse auf, das beispielsweise einen Deckel 23, die als Boden des Gehäuses ausgebildete Temperierplatte 4 und seitliche Befestigungsstrukturen 24 zum Befestigen des Batteriemoduls 2 in dem Gehäuse aufweist.

Zwischen dem Batteriemodul 2 und der Temperierplatte 4 ist eine Wärmeleitpaste 3 angeordnet, um eine thermische Verbindung zwischen der Temperierplatte 4 und dem Batteriemodul 2 herzustellen und auf diese Weise eine effiziente Temperierung der in dem Batteriemodul 2 aufgenommenen Batteriezellen zu ermöglichen.

Das Batteriemodul 2 ist mittels einer Befestigungseinrichtung 21 an den seitlichen Befestigungsstrukturen 24 des Gehäuses montiert. Hierzu umfasst die Befestigungseinrichtung 21 beispielsweise einen Schraubbolzen 22, mittels dessen das Batteriemodul 2 an den seitlichen Befestigungsstrukturen 24 des Gehäuses angeschraubt und in einer vorgegebenen Position fixiert wird. Die Befestigungseinrichtung 21 sorgt auch dafür, dass das Batteriemodul 2 in vorgegebener Weise gegenüber der Temperierplatte 4 positioniert ist. Die Befestigungseinrichtung 21 kann beispielsweise auch in Form einer Verrastung oder einer anderen schraubenlosen Befestigung vorgesehen sein.

Die zwischen dem Batteriemodul 2 und der Temperierplatte 4 angeordnete Wärmeleitpaste 3 wird bei dem Prozess des Befestigens des Batteriemoduls 2 an der seitlichen Befestigungsstruktur 24 des Gehäuses verteilt und teilweise verdrängt, so dass eine im Wesentlichen lückenlose Benetzung mit der Wärmeleitpaste 3 und entsprechend eine im Wesentlichen vollflächige thermische Verbindung zwischen dem Batteriemodul 2 und der Temperierplatte 4 hergestellt ist. Die Wärmeleitpaste 3 stellt auch eine elektrische Isolierung bereit.

Um zu verhindern, dass ein direkter Kontakt zwischen dem Batteriemodul 2 und der Temperierplatte 4 hergestellt wird, was zu einer elektrischen Kontaktierung und damit im Extremfall zu einem Kurzschluss führen könnte, ist ein elektrisch isolierender Distanzhalter 5 vorgesehen, der zwischen der Temperierplatte 4 und dem Batteriemodul 2 angeordnet ist. Beispielsweise kann mittels des Distanzhalters 5 vermieden werden, dass es durch Schwingungen während des Fahrbetriebs oder durch ein Fließen der Wärmeleitpaste 3 zu einem späteren Zeitpunkt zu einer unzureichenden elektrischen Isolation zwischen dem Batteriemodul 2 und der Temperierplatte 4 durch eine zu geringe Stärke der dazwischen angeordneten Wärmeleitpaste 3 kommen kann.

Der Distanzhalter 5 kann in seiner Dicke so eingestellt sein, dass ein Mindestabstand zwischen dem Batteriemodul 2 und der Temperierplatte jederzeit aufrecht erhalten bleibt. Dieser Mindestabstand ist bevorzugt auch größer, als eine maximale Größe von Schmutzpartikeln, beispielsweise Metallspäne, die bei der Montage der Batterie vorliegen könnten. Entsprechend kann auch bei einem ungewollten Eintrag von Verschmutzungen während des Montagevorgangs sichergestellt werden, dass die elektrische Isolierung zwischen dem Batteriemodul 2 und der Temperierplatte 4 aufrechterhalten bleibt.

Im montierten Zustand kann der elektrisch isolierende Distanzhalter 5 dabei durch seine Dicke dazu führen, dass die Temperierplatte 4 elastisch und/oder plastisch verformt wird. Beispielsweise kann der elektrisch isolierende Distanzhalter 5 die Temperierplatte 4 zumindest im Bereich der Anlage des Distanzhalters 5 an der Temperierplatte 4 die Temperierplatte 4 quasi wegdrücken, wenn das Batteriemodul 2 bei der Montage auf den elektrisch isolierenden Distanzhalter 5 drückt.

Dabei kann durch das gewählte Material der Temperierplatte 4, beispielsweise der Legierung des Materials der Temperierplatte 4, sichergestellt werden, dass die Kräfte, die durch die Verformung auf das Batteriemodul 2 wirken, im zulässigen Bereich verbleiben.

In einer anderen Anordnung kann die Dicke des elektrisch isolierenden Distanzhalters 5 aber auch dazu führen, dass noch ein Spalt zwischen dem elektrisch isolierenden Distanzhalter 5 und der Temperierplatte 4 und/oder dem Batteriemodul 2 vorhanden ist und dieser Spalt dann auch zumindest teilweise mit Wärmeleitpaste 3 gefüllt ist. Diese Situation kann beispielsweise auch auftreten, wenn durch den Verdrängungswiderstand der Wärmeleitpaste 3 der Spalt zwischen Batteriemodul 2 und Temperierplatte 4 größer bleibt, als die Dicke des elektrisch isolierenden Distanzhalters 5.

Der Distanzhalter 5 kann in einer Position angeordnet sein, die durch die geometrische Anordnung des Batteriemoduls 2, der Temperierplatte 4 und der Befestigungseinrichtungen 21 zueinander vorgegeben ist.

Beispielsweise kann der Distanzhalter 5, wie im hier gezeigten Ausführungsbeispiel, mittig zwischen den durch die Befestigungseinrichtungen 21 vorgegebenen fixen Befestigungspunkten angeordnet sein. An dieser Position beziehungsweise in diesem Bereich ist die Durchhängung quasi maximal und eine mögliche Verformung des Batteriemoduls 2 und/oder der Temperierplatte 4 durch Schwingungen potentiell am größten. In diesem Bereich kann daher der Distanzhalter 5 seine beste Wirkung erzielen.

Der Distanzhalter 5 kann aber auch an anderen Positionen auf der Temperierplatte 4 angeordnet sein, beispielsweise zwischen den Schwingungsknoten der Temperierplatte 4, wenn diese unter Betriebsbedingungen zu Schwingungen angeregt wird.

Der Distanzhalter 5 kann in seiner Dicke so ausgebildet sein, dass er zwischen dem Batteriemodul 2 und der Temperierplatte 4 eingeklemmt wird, wenn das Batteriemodul 2 über die Befestigungseinrichtung 21 an der seitlichen Befestigungsstruktur 24 festgelegt ist. Mit anderen Worten kann es im montierten Zustand zu einer leichten Deformation der Temperierplatte 4 und/oder des Batteriemoduls 2 und/oder des Distanzhalters 5 so kommen, dass eine geringe Vorspannung aufgebracht ist.

Der Distanzhalter 5 ist in dem gezeigten Ausführungsbeispiel rechteckig und einteilig aus einem Kunststoffmaterial ausgeformt. Dabei kontaktiert der Distanzhalter 5 auf einer Oberseite 50 vollflächig eine Unterseite des Batteriemoduls 20 und auf einer Unterseite 51 vollflächig eine Oberseite der Temperierplatte 40 im Bereich der Deformation 41. Hierdurch ist eine vorteilhafte Lastverteilung über die kontaktierenden Flächen sichergestellt.

Der Distanzhalter 5 und das Batteriemodul 2 sind auf der Temperierplatte 4 beispielsweise so angeordnet, dass der Distanzhalter 5 auf einer Mittelebene 6 bezüglich des Batteriemoduls 2 angeordnet ist. Der Distanzhalter 5 ist hierzu mittig auf der Oberseite der Temperierplatte 40 angeordnet und das Batteriemodul 2 ist so angeordnet, dass der Distanzhalter 5 mittig auf dem Batteriemodul angeordnet ist.

Weiterhin weist der Distanzhalter 5 eine Länge auf, die kleiner ist als eine in parallele Richtung erstreckende Länge des Batteriemoduls 2. Die in Figur 1 gezeigte Erstreckungsrichtung L, ist eine Achse, die parallel zu der Länge des Batteriemoduls 2 und der Länge des Distanzhalters 5 verläuft. Der Distanzhalter 5 kann auch die gleiche Länge aufweisen, wie das Batteriemodul 2.

Der Distanzhalter 5 ist an einer Position der Temperierplatte 4 angeordnet, die innerhalb einer durch die Befestigungseinrichtungen 21 zur Befestigung des Batteriemoduls 2 gebildeten Fläche der Temperierplatte 4 liegt. Der Distanzhalter kann in einem mittleren oder inneren Bereich dieser Fläche liegen. Mit anderen Worten ist die Fläche begrenzt durch die Befestigungseinrichtungen 21, so dass der Distanzhalter 5 innerhalb der durch die Befestigungseinrichtungen 21 gebildeten Begrenzung liegt.

Um eine optimale Temperierung des Batteriemoduls 2 sicherzustellen ist im durch den Distanzhalter 5 zwischen dem Batteriemodul 2 und der Temperierplatte 4 ausgebildeten Spalt vollflächig Wärmeleitpaste 3 angeordnet. Dabei kontaktiert die Wärmeleitpaste 3 den Distanzhalter 5 seitenumfänglich vollflächig, sodass eine optimale Temperierung auch im Bereich des Distanzhalters 5 möglich ist.

Wenn der Distanzhalter 5 den gleichen oder einen ähnlichen Wärmeübertragungskoeffizienten wie die Wärmeleitpaste 3 aufweist, kann hier ein besonders homogener Wärmeübertrag stattfinden.

Dazu kann die Wärmeleitpaste 3 nach der Anordnung des Distanzhalters 5 auf der Temperierplatte 4 aufgetragen werden und dann das Batteriemodul 2 montiert werden.

Die Temperierplatte 3 umfasst eine Bodenplatte 44 und Kühlkanäle 45. Durch die Kühlkanäle 45 kann ein Temperiermedium (nicht gezeigt) geleitet, sodass, abhängig vom Betriebszustand der Batterie 1 von dem Batteriemodul 2 Wärme abgeführt oder diesem Wärme zugeführt wird.

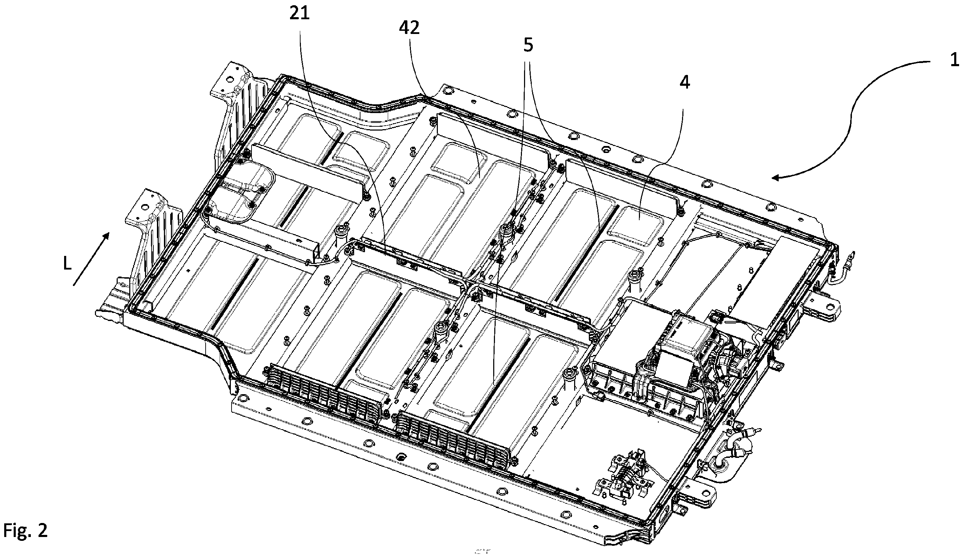

In Figur 2 ist eine perspektivische Ansicht auf eine Temperierplatte 4 gezeigt. Die Temperierplatte 4 weist eine Vielzahl von Einsenkungen 42 auf, in welchen Distanzhalter 5 angeordnet sind.

Die Temperierplatte 4 wird zum Einbringen der Einsenkungen 42 mittels Tiefziehens verformt, sodass die Temperierplatte 4 eine definierte Auflagefläche für Distanzhalter 5 aufweist. Nach der Anordnung eines Distanzhalters 5 in der Einsenkung 42 ragt der Distanzhalter 5 aus der Einsenkung 42 heraus, um auf diese Weise die Beabstandung zwischen Batteriemodul 2 und Temperierplatte 4 zu erreichen. Hierdurch kann eine Auflagefläche für das Batteriemodul 2 geschaffen werden, wobei die Anordnung einen Mindestspalt zwischen Batteriemodul 2 und Temperierplatte 4 sicherstellt.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Batterie
- 2: Batteriemodul
- 3: Wärmeleitpaste
- 4: Temperierplatte
- 5: Distanzhalter
- 6: Mittelebene
- 20: Unterseite des Batteriemoduls
- 21: Befestigungseinrichtung
- 22: Schraubbolzen
- 23: Deckel
- 24: seitliche Befestigungsstrukturen
- 40: Oberseite der Temperierplatte
- 41: Deformation
- 42: Einsenkung
- 43: Kühleinrichtung
- 44: Bodenplatte
- 45: Kühlkanal
- 50: Oberseite des Distanzhalters
- 51: Unterseite des Distanzhalters
- L: Erstreckungsrichtung

## Patentansprüche

1. Batterie (1), insbesondere Traktionsbatterie für ein Kraftfahrzeug, umfassend ein Batteriemodul (2) und eine Temperierplatte (4), wobei zwischen dem Batteriemodul (2) und der Temperierplatte (4) eine Wärmeleitpaste (3) angeordnet ist,
**dadurch gekennzeichnet, dass**
zwischen dem Batteriemodul (3) und der Temperierplatte (4) ein elektrisch isolierender Distanzhalter (5) angeordnet ist.

2. Batterie (1) gemäß Anspruch 1, **dadurch gekennzeichnet, dass** der elektrisch isolierende Distanzhalter (5) eine Wärmeleitfähigkeit aufweist, die der Wärmeleitfähigkeit der Wärmeleitpaste entspricht.

3. Batterie (1) gemäß Anspruch 1 oder 2, **dadurch gekennzeichnet, dass** der elektrisch isolierende Distanzhalter (5) eine Dicke aufweist, die einen vorgegebenen Spalt zwischen dem Batteriemodul (2) und der Temperierplatte (4) sicherstellt.

4. Batterie (1) gemäß einem der vorstehenden Ansprüche, **dadurch gekennzeichnet, dass** der elektrisch isolierende Distanzhalter (5) eine Dicke aufweist, die bei einem an der Temperierplatte (4) angeordneten Batteriemodul (2) zu einer elastischen und/oder plastischen Verformung der Temperierplatte (4) zumindest im Bereich der Anlage des elektrisch isolierenden Distanzhalters (5) an der Temperierplatte (4) führt.

5. Batterie (1) gemäß einem der vorstehenden Ansprüche, **dadurch gekennzeichnet, dass** der elektrisch isolierende Distanzhalter (5) mit der Temperierplatte (4) verklebt ist.

6. Batterie (1) gemäß einem der vorstehenden Ansprüche, **dadurch gekennzeichnet, dass** der elektrisch isolierende Distanzhalter (5) auf einer Mittelebene (6) des Batteriemoduls (2) angeordnet ist.

7. Batterie (1) gemäß einem der vorstehenden Ansprüche, **dadurch gekennzeichnet, dass** der elektrisch isolierende Distanzhalter (5) an einer Position der Temperierplatte (4) angeordnet ist, die innerhalb einer durch Befestigungseinrichtungen (21) zur Befestigung des Batteriemoduls (2) gebildeten Fläche der Temperierplatte (4) liegt, insbesondere in einem mittleren Bereich dieser Fläche.

8. Batterie (1) gemäß einem der vorstehenden Ansprüche, **dadurch gekennzeichnet, dass** der elektrisch isolierende Distanzhalter (5) eine Länge aufweist, die kleiner oder gleich einer sich parallel dazu erstreckenden Länge des Batteriemoduls (2) ist.

9. Batterie (1) gemäß einem der vorstehenden Ansprüche, **dadurch gekennzeichnet, dass** die Wärmeleitpaste (3) den elektrisch isolierenden Distanzhalter (5) zumindest seitlich umgibt.

10. Batterie (1) gemäß einem der vorstehenden Ansprüche, **dadurch gekennzeichnet, dass** der elektrisch isolierende Distanzhalter (5) einen über seine Länge hinweg konstanten Querschnitt aufweist, wobei der Querschnitt viereckig oder bevorzugt rechteckig ausgeformt sein kann.

11. Batterie (1) gemäß einem der vorstehenden Ansprüche, **dadurch gekennzeichnet, dass** die Temperierplatte (4) eine Einsenkung (42) aufweist, welche eine Aufnahme für den elektrisch isolierenden Distanzhalter (5) ausbildet, der elektrisch isolierende Distanzhalter (5) in der Einsenkung (42) angeordnet ist und der elektrisch isolierende Distanzhalter (5) über die durch die Temperierplatte (4) ausgebildete Ebene hinausragt.

12. Batterie (1) gemäß einem der vorstehenden Ansprüche, **dadurch gekennzeichnet, dass** mindestens zwei elektrisch isolierende Distanzhalter (5) je Batteriemodul (2) vorgesehen sind.
